# EUROPÄISCHE PATENTSCHRIFT

(11) **EP 3 608 025 B1**
(45) Veröffentlichungstag und Bekanntmachung des Hinweises auf die Patenterteilung: **08.10.2025**
(21) Anmeldenummer: 19190548.8
(22) Anmeldetag: 07.08.2019
(51) Int. Cl.: B02C 17/06, B02C 17/18, B02C 19/18, B29B 17/04

(54) **VORRICHTUNG ZUM KÜHLEN UND MAHLEN VON AUFBEREITUNGSGUT**
DEVICE FOR COOLING AND GRINDING GOODS TO BE PROCESSED
DISPOSITIF DE REFROIDISSEMENT ET DE BROYAGE D'ARTICLES À TRAITER

(30) Priorität: 09.08.2018 AT 506792018
(43) Veröffentlichungstag der Anmeldung: 12.02.2020
(73) Patentinhaber: Synron GmbH, 4910 Ried im Innkreis (AT)
(72) Erfinder: PANGERL, Peter, 4910 Ried im Innkreis (AT)
(74) Vertreter: Burger, Hannes

(56) Entgegenhaltungen:
- EP-A1- 2 055 386
- DE-A1- 10 357 968
- US-A- 3 771 729

## Beschreibung

Die Erfindung betrifft eine Vorrichtung zum Kühlen und Mahlen von Aufbereitungsgut bzw. Abfallgut.

Vorrichtungen zum Zerkleinern von diversen Gütern werden in mannigfaltigen Ausgestaltungsformen hergestellt und werden in vielen Bereichen zur Aufbereitung der Güter eingesetzt. Ein Beispiel ist das Zerkleinern von Abfallgut bzw. Abfallprodukten, um ein nachfolgendes Trennen und Recycling einzelner Materialien bzw. Stoffe des Gutes zu ermöglichen. Während viele Güter grundsätzlich bei Umgebungstemperatur aufbereitet bzw. zerkleinert werden können, kann es in einigen Fällen erforderlich sein, die Güter vorher abzukühlen um ein Mahlen erst möglich zu machen. So ist es beispielsweise bei Gütern, welche gummielastische Stoffe enthalten oftmals notwendig, diese Güter zu verspröden, insbesondere die Güter unter eine Glastemperatur solcher gummielastischen Stoffe abzukühlen.

Grundsätzlich ist es bekannt, insbesondere Aufbereitungsgut umfassend gummielastische Stoffe mittels eines kryogenen Kühlmediums, etwa Trockeneis oder flüssigen Stickstoff zuerst abzukühlen, und anschließend einer Vermahlung zuzuführen. Bei heute üblichen, kryogenen Mahlverfahren wird das Abkühlen in einer Kühleinheit bzw. einer Abkühlvorrichtung durchgeführt, und das abgekühlte Aufbereitungsgut sodann in eine separate Mahleinheit bzw. Zerkleinerungsmaschine überführt. Solche Anlagen sind zum Beispiel aus der EP 3 135 380 A1, der DE 103 57 968 A1 oder der DE 299 08 970 U1 bekannt. Problematisch bei diesen heute üblichen Verfahren ist jedoch der hohe Verbrauch an Kühlmedium, was sich wiederum nachteilig auf die Kosten für solche Verfahren auswirkt. Je nach dem aufzubereitenden Aufbereitungsgut können heute übliche Kryogenmahlverfahren in bestimmten Fällen unrentabel sein, und wird daher eine grundsätzlich mögliche Aufbereitung und ein nachfolgendes Recycling aus wirtschaftlichen Gründen unterlassen.

Aus der US 3,771,729 A und der EP 0015151 A1 sind weitere Beispiele für kryogene Mahlvorrichtungen bekannt geworden, bei welchen ein abgekühltes, versprödertes Mahlgut mittels angetriebenen, mechanischen Mahlvorrichtungen zerkleinert wird. Eine Vorrichtung gemäß dem Oberbegriff des unabhängigen Anspruchs ist in der EP 2 055 386 A1 offenbart.

Eine weitere Problematik ergibt sich bei den heute üblichen, kryogenen Mahlvorrichtungen aufgrund der eingesetzten Mahlvorrichtungen selbst. Bei mechanischen Mahlvorrichtungen kann die tiefe Mahltemperatur in kurzer Zeit zu Beschädigungen, insbesondere an angetriebenen, beweglichen Teilen solcher Mahlvorrichtungen führen. Daher werden heute häufig Prallzerkleinerungsvorrichtungen benutzt, bei welchen das Aufbereitungsgut meist in sogenannten Schleuderbrechern durch schnell laufende Rotore beschleunigt und gegen Prallelemente geschleudert wird. Bei den letztgenannten Verfahren kommt es allerdings zu einem nochmals erhöhten Verbrauch an Kühlmedium, da nicht nur das Aufbereitungsgut selbst, sondern zusätzlich auch eine beträchtliche Menge an Prozessluft mit abgekühlt werden muss. Außerdem muss diese Prozessluft nach der Zerkleinerung von dem aufbereiteten Gut in Zyklon-Anlagen wieder getrennt werden, um eine weitere Aufbereitung des Gutes zu ermöglichen.

Aufgabe der vorliegenden Erfindung war es, die Nachteile des Standes der Technik zu überwinden und eine Vorrichtung zur Verfügung zu stellen, welche eine dauerhafte, prozessstabile Kaltvermahlung einer großen Palette unterschiedlichster Aufbereitungsgüter ermöglicht, und mittels welcher Vorrichtung die Wirtschaftlichkeit von Kaltvermahlungen verbessert werden kann.

Diese Aufgabe wird durch eine Vorrichtung gemäß den Ansprüchen gelöst.

Die erfindungsgemäße Vorrichtung zum Kühlen und Mahlen von Aufbereitungsgut bzw. Ausgangs-Stückgut, zum Beispiel Abfallgut, umfasst wie an sich bekannt eine Abkühleinheit zum Abkühlen des Aufbereitungsguts mit einem Zufuhrmittel zum Zuführen eines Kühlmediums, sowie eine Mahleinheit mit wenigstens einem Mahlmittel zum Zerkleinern des Aufbereitungsguts

Wesentlich ist, dass die Abkühleinheit und die Mahleinheit in einem gemeinsamen, gegenüber einer Umgebung versiegelten Gehäuse angeordnet sind. Zum Einbringen des Aufbereitungsguts ist eine Eintragsschleuse und zum Austragen des zerkleinerten Guts bzw. Schüttguts ist eine Austragsschleuse vorgesehen. Die Abkühleinheit ist hierbei durch zumindest eine im Inneren des Gehäuses angeordnete Kühlzone gebildet und die Mahleinheit ist durch zumindest eine im Inneren des Gehäuses angeordnete Mahlzone gebildet. Die zumindest eine Kühlzone und die zumindest eine Mahlzone sind gasaustauschtechnisch bzw. druckausgleichstechnisch miteinander verbunden. Zwischen der zumindest einen Kühlzone und der zumindest einen Mahlzone ist eine Übertrittssperre, wie etwa eine Trennplatte für festes oder flüssiges Kühlmedium angeordnet. Des Weiteren ist eine Transportstrecke zum Transfer des Aufbereitungsguts in einer Transportrichtung von der Eintragsschleuse in die zumindest eine Kühlzone und von der zumindest einen Kühlzone in die zumindest eine Mahlzone ausgebildet.

Durch diese baulichen Merkmale kann eine Vorrichtung bereitgestellt werden, mittels derer Kaltmahlvorgänge in wirtschaftlich vorteilhafter Weise durchgeführt werden können. Die Unterbringung der Kühleinheit und Mahleinheit durch Ausbilddung der zumindest einen Kühlzone und zumindest einen Mahlzone in einem gemeinsamen Gehäuse ermöglicht zum einen eine besonders platzsparende Bauweise, was Vorteile insbesondere bei platzbeschränkend Aufstellungsorten bringt. Das Aufbereitungsgut kann im Betrieb der Vorrichtung über die Eintragsschleuse eingebracht, und das aufbereitete bzw. zerkleinerte Gut kann über die Austragsschleuse ausgebracht werden, sodass es außer durch das Aufbereitungsgut selbst zu keinem wesentlichen Eintrag von Wärme aus der Umgebung kommt.

Aufgrund der gasaustauchtechnischen bzw. druckausgleichstechnischen Verbindung der zumindest einen Kühlzone und der zumindest einen Mahlzone kann eine durchgehend kalte Atmosphäre in dem Gehäuse hergestellt werden, da kaltes, gasförmiges bzw. verdampftes Kühlmedium, wie etwa gasförmiges CO₂ beim Einsatz von Trockeneis oder gasförmiges N₂ beim Einsatz von Flüssigstickstoff sich gleichmäßig in dem Gehäuse verteilen kann. Gleichzeitig ist aber ein unerwünschter Übertritt von festen oder flüssigem Kühlmedium, wie etwa Eiswasser, Trockeneis oder Flüssigstickstoff in die zumindest eine Mahlzone durch die Übertrittsperre unterbunden, wobei das Aufbereitungsgut via die Transportstrecke, beispielsweise einen Schaufelmechanismus bzw. Hebemechanismus oder einer anderen Fördervorrichtung von der zumindest einen Kühlzone in die zumindest eine Mahlzone transportiert werden kann. Besonders vorteilhafte Ausgestaltungen der Transportstrecke werden nachstehend noch erläutert.

Im Betrieb der Vorrichtung resultiert eine durchgehend kalte Atmosphäre in dem gesamten Gehäuse einfach aufgrund des automatisch bzw. von selbst ablaufenden Gasaustausch zwischen der zumindest einen Kühlzone und der zumindest einen Mahlzone. Hierdurch kann die Bandbreite an verarbeitbaren Aufbereitungsgütern gesteigert werden. Beispielsweise können auch solche Aufbereitungsgüter verarbeitet werden, bei welchen mögliche, durch das Zerkleinern selbst hervorgerufene chemische Reaktionen, etwa durch Austreten und Vermischen von reaktiven Substanzen, aufbereitet werden, da solche chemische Reaktionen in der tiefkalten Atmosphäre der zumindest einen Mahlzone unterdrückt werden können. Dies, ohne dass eine zusätzliche Kühlung in der zumindest einen Mahlzone erforderlich ist, was eine weitere Einsparung an Kühlmedium ermöglicht.

Das Zuführmittel zum Zuführen eines Kühlmediums kann in an sich bekannter Weise ausgestaltet sein, wobei als Kühlmedium in Abhängigkeit von den Erfordernissen an die Mahltemperatur des Aufbereitungsguts grundsätzlich festes, flüssiges oder gasförmiges Kühlmedium verwendet werden kann. Vorzugsweise ist ein Zuführmittel zum Zudosieren von flüssigem Kühlmedium ausgestaltet. Zur Zudosierung ist bevorzugt eine Steuerungsvorrichtung ausgebildet, welche mit mindestens einem im Inneren des Gehäuses angebrachten Temperatursensor signalverbunden ist, und welche Steuerungsvorrichtung zur Dosierung des Kühlmediums in die zumindest eine Kühlzone durch Ansteuerung eines entsprechenden Ventils ausgebildet ist.

Als Mahlmittel kann in der zumindest einen Mahlzone im Prinzip jedwedes an sich bekannte Mahlmittel verwendet werden bzw. angeordnet sein. So kann zum Beispiel eine Press-, Stampf-Vorrichtung oder eine anders ausgestaltete Mahlvorrichtung angeordnet sein, wobei ein allfälliger Antrieb für eine Mahlvorrichtung außerhalb des Gehäuses angeordnet sein kann. Bevorzugte Ausgestaltungen der Mahlzone oder Mahlzonen bzw. darin angeordneter Mahlmittel werden nachstehend erläutert.

Selbstverständlich ist es grundsätzlich auch möglich, dass mehrere Kühlzonen bzw. Kühlzonen zum stufenweisen Abkühlen des Aufbereitungsguts vor dem Zerkleinern bzw. Mahlen vorgesehen sind, wobei das Abkühlen des Aufbereitungsguts aus prozesstechnischen Gründen vorzugsweise in einer einzelnen Kühlzone bewerkstelligt werden kann. Des Weiteren ist es natürlich auch möglich mehrere Mahlzonen zum stufenweisen Zerkleinern des abgekühlten Aufbereitungsguts vorzusehen, wobei die Art die Art der Mahlmittel von Mahlzone zu Mahlzone anders ausgestaltet sein kann. Auf diese Weise kann eine erste Mahlzone zum Beispiel zur Grobzerkleinerung und eine weitere, in Transportrichtung folgend auf die erste Mahlzone angeordnete, weitere Mahlzone zur Feinzerkleinerung ausgestaltet sein. Zum Beispiel kann eine Mahlkaskade mit mehreren aufeinanderfolgend angeordneten, durch Überlaufwehre oder Siebe unterteilte Mahlzonen ausgebildet sein.

Bei der Vorrichtung kann vorgesehen sein, dass das Gehäuse durch einen gegenüber der Umgebung versiegelten Hohlzylinder gebildet ist, welcher Hohlzylinder derart gelagert ist, dass eine Zylindermittelachse des Hohlzylinders zumindest im Wesentlichen parallel zu einer Aufstandsfläche für den Hohlzylinder verläuft.

Eine derartige Konstruktionsweise des Gehäuses der Vorrichtung ermöglicht eine effiziente, aufeinanderfolgende Unterbringung der einzelnen Zonen, und ist zusätzlich einfach und kostengünstig herzustellen, beispielsweise aus Rohrprofilen. Außerdem weist ein solches Gehäuse gute Wärmeisolationseigenschaften auf, bzw. ist auch in einfacher Art und Weise mit Isoliermaterial zu isolieren. Ein derartiges Gehäuse ist auch optimal, um rotierende Mahlvorrichtungen, wie etwa eine rotierende Hammermühle aufzunehmen. Eine Lagerung des Hohlzylinders kann vorzugsweise derart gewählt sein, dass die Zylindermittelachse parallel bzw. zumindest annähernd parallel zur Aufstandsfläche für den Hohlzylinder ausgerichtet ist. Die Lagerung des Hohlzylinders kann aber auch derart gewählt sein, dass die Zylindermittelachse gegenüber einer Aufstandsfläche bzw. Aufstellfläche leicht geneigt ist, wobei ein im Bereich der Austragsschleuse angeordneter Teil der Zylindermittelachse näher an der Aufstandsfläche positioniert sein kann, als ein im Bereich der Eintragsschleuse angeordneter Teil der Zylindermittelachse. Auf diese Weise kann die Schwerkraft zur Fortbewegung des Aufbereitungsguts bzw. von zerkleinerten Gut genutzt werden.

In weiterer Folge kann bei der Vorrichtung aber auch vorgesehen sein, dass der Hohlzylinder um die Zylindermittelachse rotierbar gelagert ist, und dass in der zumindest einen Mahlzone oder in den Mahlzonen Mahlkörper angeordnet sind.

Auf diese Weise können etwa angetriebene Mahlmechanismen in der tiefkalten Atmosphäre im Inneren des Gehäuses erübrigt werden, und kann im Betrieb der Vorrichtung dennoch eine sehr gute Mahlleistung erzielt werden. Die Zerkleinerung des Aufbereitungsmaterials resultiert aufgrund der Beanspruchung durch die Mahlkörper in dem langsam rotierenden Hohlzylinder. Die Vermeidung von verstellbaren Mahlmechanismen verbessert auch die Wartung bzw. Instandhaltung der Vorrichtung, da die Mahlkörper in der oder den Mahlzone(n) im Falle einer Abnutzung ohne großen Aufwand ersetzt werden können. Hierzu ist insbesondere keine Demontage diverser Komponenten einer komplexeren Mahlvorrichtung erforderlich. Im Vergleich mit den heute üblichen Verfahren der Prallzerkleinerung, bei welchen große Luftmengen zum Transport und Beschleunigen des Aufbereitungsguts notwendig sind, können durch diese Ausgestaltung der Vorrichtung die Betriebskosten deutlich verringert werden. Dies vor allem deshalb, da es nicht nötig ist große Luftmengen zusätzlich zum Aufbereitungsgut abzukühlen, und daher wesentlich weniger Kühlmedium eingesetzt werden muss. Außerdem muss das zerkleinerte Gut nach dem Vermahlen nicht von Prozessluft getrennt werden, um kann so eine rasche Weiterverarbeitung gegebenenfalls noch im erkalteten Zustand erfolgen.

Es kann aber auch zweckmäßig sein, wenn die Transportstrecke eine entlang der Zylindermittelachse des Hohlzylinders verlaufend angeordnete, ummantelte Förderschnecke umfasst, wobei eine Ummantelung der Förderschnecke im Bereich der zumindest einen Kühlzone eine in Richtung einer Aufstandsfläche bzw. Aufstellfläche für den Hohlzylinder weisende Austrittsöffnung für das Aufbereitungsgut aufweist.

Im Betrieb der Vorrichtung kann durch diese Merkmale eine einfache, aber effiziente und prozessichere Einbringung des Aufbereitungsguts in die zumindest eine Kühlzone bereitgestellt werden. Außerdem kann das Aufbereitungsgut sehr rasch abgekühlt werden, insbesondere durch Hineinfallen in vorgelegtes, flüssiges Kühlmedium in der Kühlzone.

Von Vorteil kann es des Weiteren sein, wenn die Ummantelung der Förderschnecke im Bereich der zumindest einen Kühlzone eine in Transportrichtung nach der Austrittsöffnung angeordnete, von der Aufstandsfläche wegweisende Eintrittsöffnung für das Aufbereitungsgut aufweist, wobei in der zumindest einen Kühlzone als Hebevorrichtung für das Aufbereitungsgut wenigstens eine perforierte, an einem umlaufenden Zylindermantel des Hohlzylinders befestigte und radial in Richtung der Zylindermittelachse oder in einem Winkel zu der Zylindermittelachse in die zumindest eine Kühlzone hineinragende Mitnehmerplatte angeordnet ist, und wobei die Ummantelung der Förderschnecke eine in die zumindest eine Mahlzone mündende oder hineinragende Austragsöffnung für das Aufbereitungsgut aufweist.

Dadurch ist wiederum ein einfaches, effizientes und prozesssicheres Transportmittel für die Überführung des Aufbereitungsguts von der zumindest einen Kühlzone in die zumindest eine Mahlzone bereitgestellt. Im Besonderen kann in Verbindung mit der Übertrittssperre für flüssiges oder festes Kühlmedium ein unerwünschtes Übertreten von flüssigem oder festen Kühlmedium aus der zumindest einen Kühlzone in die zumindest eine Mahlzone hintangehalten werden. Die Ummantelung der Förderschnecke bzw. die Förderschnecke kann zum Beispiel durch eine im Bereich der Zylindermittelachse angeordnete Öffnung in der Übertrittssperre hindurchgeführt sein oder münden, sodass die Austragsöffnung in die zumindest eine Mahlzone mündet oder hineinragt. Die Perforation der Mitnehmerplatte kann derart gewählt bzw. dimensioniert sein, dass das Aufbereitungsgut bzw. dessen Stücke nicht durch die Löcher bzw. Durchbohrungen der Mitnehmerplatte hindurch gelangen können, jedoch flüssiges Kühlmedium, wie Eiswasser oder flüssiger Stickstoff durch die Löcher gelangen kann. Auf diese Weise kann die Mitnehmerplatte als Hebevorrichtung für das Aufbereitungsgut verwendet werden, wohingegen flüssiges Kühlmedium durch die Perforation der Mitnehmerplatte abfließen bzw. Abtropfen kann, und so ein unerwünschter Übertritt von flüssigem Kühlmedium in die Mahlzone(n) hintangehalten ist.

Des Weiteren kann die wenigstens eine Mitnehmerplatte derart in der zumindest einen Kühlzone angeordnet sein, dass quer zur Zylindermittelachse des Hohlzylinders verlaufende Kanten der Mitnehmerplatte in einer Rotationsrichtung des Hohlzylinders auf gleicher Höhe laufen. Die wenigstens eine Mitnehmerplatte kann aber auch derart gekippt in dem Hohlzylinder angeordnet sein, dass in Rotationsrichtung des Hohlzylinders die zur zumindest einen Mahlzone weisende Kante der Mitnehmerplatte der von der zumindest einen Mahlzone wegweisenden Kante der Mitnehmerplatte nacheilt. Diese Anordnung kann insbesondere bei Lagerung des Hohlzylinders mit parallel zur Aufstandsfläche ausgerichteter Zylindermittelachse von Vorteil sein, da das Aufbereitungsgut hierdurch im Betrieb der Vorrichtung bzw. bei Rotation des Hohlzylinders schwerkraftbedingt auf der Mitnehmerplatte in Richtung der Eintrittsöffnung der Ummantelung der Förderschnecke gedrängt werden kann.

Sinnvoll kann auch eine Ausgestaltungsform der Vorrichtung sein, bei welcher in dem Gehäuse in Transportrichtung folgend auf die zumindest eine Mahlzone oder folgend auf eine in Transportrichtung letztangeordnete Mahlzone eine Austragszone für das zerkleinerte Gut angeordnet ist, wobei zwischen der zumindest einen Mahlzone oder der in Transportrichtung letztangeordneten Mahlzone und der Austragszone eine umlaufende Überlaufwehr oder eine umlaufende, perforierte Siebplatte angeordnet ist.

Durch diese Merkmale kann eine gegenüber der zumindest einen Mahlzone abgesicherte Austragszone für zerkleinertes Gut bereitgestellt werden, wodurch ein prozesssicheres Austragen des zerkleinerten Guts aus dem Gehäuse bzw. dem Hohlzylinder ermöglicht ist. Im Besonderen kann im Betrieb der Vorrichtung ein unerwünschtes Übertreten von Mahlkörpern von der zumindest einen Mahlzone in die Austragszone hintangehalten werden. Im Falle der Anordnung einer Siebplatte kann weiters ein Übertritt von noch nicht klein genug gemahlenen Aufbereitungsgut und dessen unerwünschte Austragung aus dem Gehäuse hintangehalten werden.

In weiterer Folge kann auch vorgesehen sein, dass eine weitere Transportstrecke zum Transfer des zerkleinerten Guts aus der Austragszone zu der Austragsschleuse ausgebildet ist, wobei in der Austragszone als Hebevorrichtung für das zerkleinerte Gut mindestens eine an einem umlaufenden Zylindermantel des Hohlzylinders befestigte und radial in Richtung der Zylindermittelachse oder in einem Winkel zu der Zylindermittelachse in die Austragszone hineinragende Hebeplatte angeordnet ist.

Diese Merkmale ermöglichen im Betrieb der Vorrichtung ein einfaches und dennoch effizientes und prozesssicheres Austragen des zerkleinerten Guts. Die weitere Transportstrecke kann zum Beispiel durch eine Materialrutsche für das zerkleinerte Gut gebildet sein, welche Materialrutsche zur Austragsschleuse hin in Richtung der Aufstandsfläche für die Vorrichtung geneigt in dem Gehäuse bzw. Hohlzylinder angeordnet ist.

Es kann aber auch von Vorteil sein, wenn die weitere Transportstrecke eine weitere entlang der Zylindermittelachse des Hohlzylinders verlaufend angeordnete, ummantelte Förderschnecke umfasst, wobei eine Ummantelung der weiteren Förderschnecke im Bereich der Austragszone eine von einer Aufstandsfläche bzw. Aufstellfläche für den Hohlzylinder wegweisende Eintrittsöffnung für das zerkleinerte Aufbereitungsgut aufweist.

Dies ermöglicht im Betrieb der Vorrichtung ein besonders prozesssicheres Austragen des zerkleinerten Guts. Die Ummantelung der weiteren Förderschnecke kann im Bereich der Austragsschleuse eine Austragsöffnung für zerkleinertes Gut aufweisen, sodass das zerkleinerte Gut via die Austragschleuse aus dem Gehäuse austragbar ist.

Bei einer Ausgestaltungsvariante der Vorrichtung kann aber auch vorgesehen sein, dass die Transportstrecke und die weitere Transportstrecke eine gemeinsame, entlang der Zylindermittelachse durchgehend durch alle Zonen verlaufend angeordnete, ummantelte Förderschnecke umfassen, wobei eine Ummantelung dieser Förderschnecke im Bereich der zumindest einen Kühlzone eine in Richtung einer Aufstandsfläche für den Hohlzylinder weisende, erste Austrittsöffnung für das Aufbereitungsgut aufweist und im Bereich der zumindest einen Mahlzone eine in Richtung der Aufstandsfläche für den Hohlzylinder weisende, zweite Austrittsöffnung für das Aufbereitungsgut aufweist, und wobei die Ummantelung dieser Förderschnecke im Bereich der zumindest einen Kühlzone eine in Transportrichtung nach der ersten Austrittsöffnung angeordnete, von der Aufstandsfläche wegweisende, erste Eintrittsöffnung für das Aufbereitungsgut aufweist und im Bereich der Austragszone eine von der Aufstandsfläche wegweisende, zweite Eintrittsöffnung für das zerkleinerte Gut aufweist, wobei in der zumindest einen Kühlzone als Hebevorrichtung für das Aufbereitungsgut wenigstens eine perforierte, an einem umlaufenden Zylindermantel des Hohlzylinders befestigte und radial in Richtung der Zylindermittelachse oder in einem Winkel zu der Zylindermittelachse in die zumindest eine Kühlzone hineinragende Mitnehmerplatte angeordnet ist, und wobei in der Austragszone als Hebevorrichtung für das zerkleinerte Gut mindestens eine an einem umlaufenden Zylindermantel des Hohlzylinders befestigte und radial in Richtung der Zylindermittelachse oder in einem Winkel zu der Zylindermittelachse in die Austragszone hineinragende Hebeplatte angeordnet ist.

Durch diese Merkmale kann im Betrieb der Vorrichtung der Transport des Aufbereitungsguts und des zerkleinerten Guts mit nur einem Fördermittel bewerkstelligt werden. Im Speziellen muss nur ein Antrieb vorgesehen werden, um das Aufbereitungsgut von der Eintragsschleuse in die Mahlzone(n) und das zerkleinerte Gut von der Austragszone zur Austragsschleuse zu transportieren.

Bei einer weiteren, bevorzugten Weiterbildung der Vorrichtung kann vorgesehen sein, dass eine von einem Austragsbereich zu einer eingangsseitig angeordneten Vorkühlkammer um das Gehäuse geführte Rezirkulationsleitung ausgebildet ist.

Durch diese Merkmale ist für den Betrieb der Vorrichtung eine Möglichkeit zur Rezirkulation von kaltem, gasförmigen Kühlmedium vom Austragsbereich bzw. vom Bereich der Austragsschleuse zum Eintragsbereich bzw. in die Vorkühlkammer bereitgestellt. Im Speziellen ist eine Vorkühlmöglichkeit für das Aufbereitungsgut vor dem Einbringen in die zumindest eine Kühlzone geschaffen, wodurch die Menge an benötigten Kühlmedium, und damit die Betriebskosten weiter gesenkt werden können.

Außerdem kann im Bereich der Vorkühlkammer ein Überdruckventil vorgesehen sein, welches bei Überdruck in dem Gehäuse geöffnet werden kann.

Schließlich kann eine Weiterbildung sinnvoll sein, bei welcher unterhalb der Austragsschleuse eine Siebvorrichtung angeordnet ist.

Hierdurch kann ein Sieben des zerkleinerten Guts noch im kalten Zustand durchgeführt werden. Im Speziellen kann ausgesiebtes, noch zu großes Gut noch im kalten Zustand zwecks neuerlicher Mahlung wieder in die Vorrichtung eingetragen bzw. zurückgeführt werden.

Zu diesem Zweck kann auch eine Rückführ-Vorrichtung zum Rückführen von ausgesiebten Gut vorgesehen sein. Eine derartige Rückführ-Vorrichtung kann zum Beispiel ein Förderband und eine Hub- und Entleer-Vorrichtung zum Einbringen des zurückzuführenden Guts in ein Aufbereitungsgut-Vorratsbehältnis umfassen. Ein Aufbereitungsgut-Vorratsbehältnis kann hierbei zum Beispiel durch einen eingangsseitig bzw. oberhalb der Eintragsschleuse angeordneten Materialtrichter gebildet sein.

Zum besseren Verständnis der Erfindung wird diese anhand der nachfolgenden Figuren näher erläutert.

Es zeigen jeweils in stark vereinfachter, schematischer Darstellung:
- Fig. 1: Ein Ausführungsbeispiel für eine Vorrichtung zum Kühlen und Mahlen von Aufbereitungsgut in Schnittansicht;
- Fig. 2: Eine ausschnittsweise, schaubildliche Darstellung eines Ausführungsbeispiels für eine Vorrichtung zum Kühlen und Mahlen von Aufbereitungsgut;
- Fig. 3: Eine ausschnittsweise, schaubildliche Darstellung eines weiteren Ausführungsbeispiels für eine Vorrichtung zum Kühlen und Mahlen von Aufbereitungsgut.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

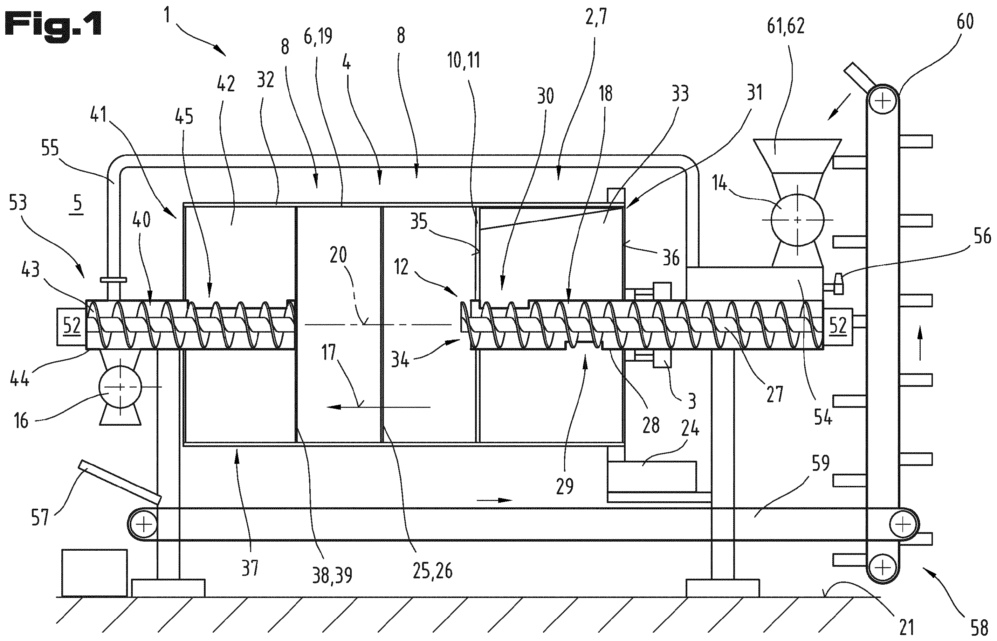

In der Fig. 1 ist ein Ausführungsbeispiel für eine Vorrichtung 1 zum Kühlen und Mahlen von Aufbereitungsgut in Schnittansicht dargestellt. Wie anhand der Fig. 1 ersichtlich ist, weist die Vorrichtung 1 eine Abkühleinheit 2 zum Abkühlen des Aufbereitungsguts auf. Die Abkühleinheit 2 weist zur Zuführung eines Kühlmediums ein Zuführmittel 3 auf. Grundsätzlich kann als Kühlmedium ein gasförmiges, flüssiges oder festes Kühlmedium über ein jeweils geeignetes Zuführmittel 3 in die Abkühleinheit 2 zugeführt werden. Vorzugsweise ist das Zuführmittel 3 zur Zuführung eines flüssigen Kühlmediums, wie zum Beispiel Eiswasser, insbesondere aber Flüssigstickstoff ausgebildet. Hierzu kann das Zuführmittel 3 zum Beispiel durch eine mit einem nicht dargestellten Flüssigstickstofftank verbundene Zuführleitung gebildet sein. Zur Zudosierung des Kühlmediums in die Abkühleinheit 2 kann das Zuführmittel 3 zum Beispiel ein ansteuerbares Ventil umfassen. Dieses Ventil kann zum Beispiel von einer nicht dargestellten Steuerungsvorrichtung angesteuert werden. Eine solche Steuerungsvorrichtung kann hierfür wie an sich bekannt zur Ansteuerung des Ventils in Abhängigkeit von einer Temperatur in der Abkühleinheit 2 ausgebildet sein. Hierzu kann oder können in der Abkühleinheit 2 ein oder mehrere Temperatursensor(en) angeordnet und mit der Steuerungsvorrichtung signalverbunden sein.

Des Weiteren weist die Vorrichtung 1 eine Mahleinheit 4 auf, welche zumindest ein Mahlmittel für das Zerkleinern des Aufbereitungsguts umfasst. Im Grunde genommen kann in der Mahleinheit 4 als Mahlmittel eine an sich bekannte Mahlvorrichtung, wie zum Beispiel eine Press-, Stampf-Vorrichtung oder eine anders ausgestaltete Mahlvorrichtung angeordnet sein. Eine bevorzugte Ausgestaltung der Mahleinheit 4 wird nachstehend anhand der weiteren Figuren noch näher erläutert.

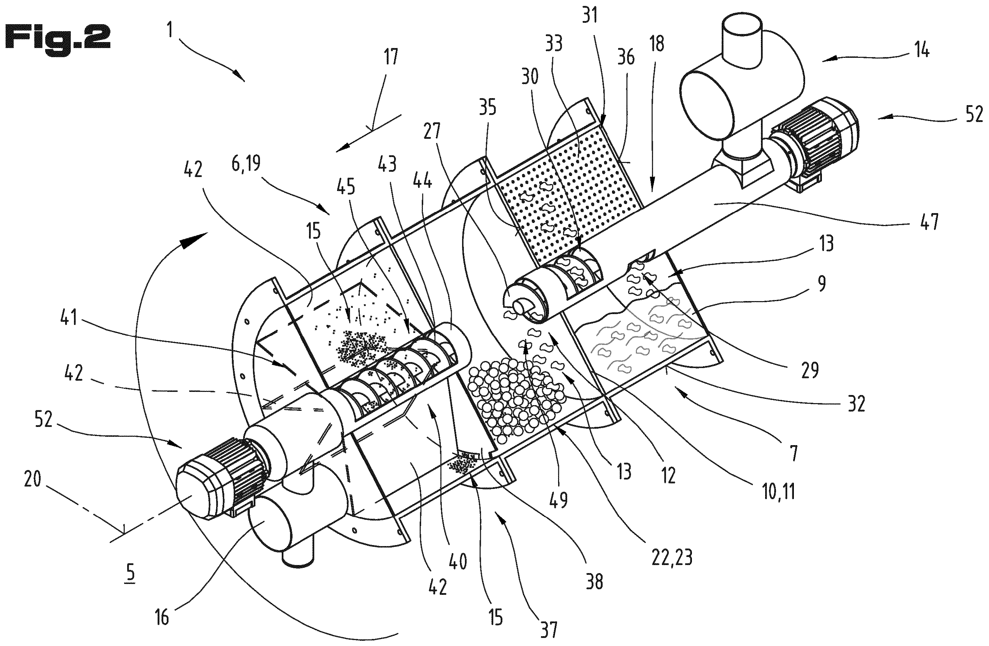

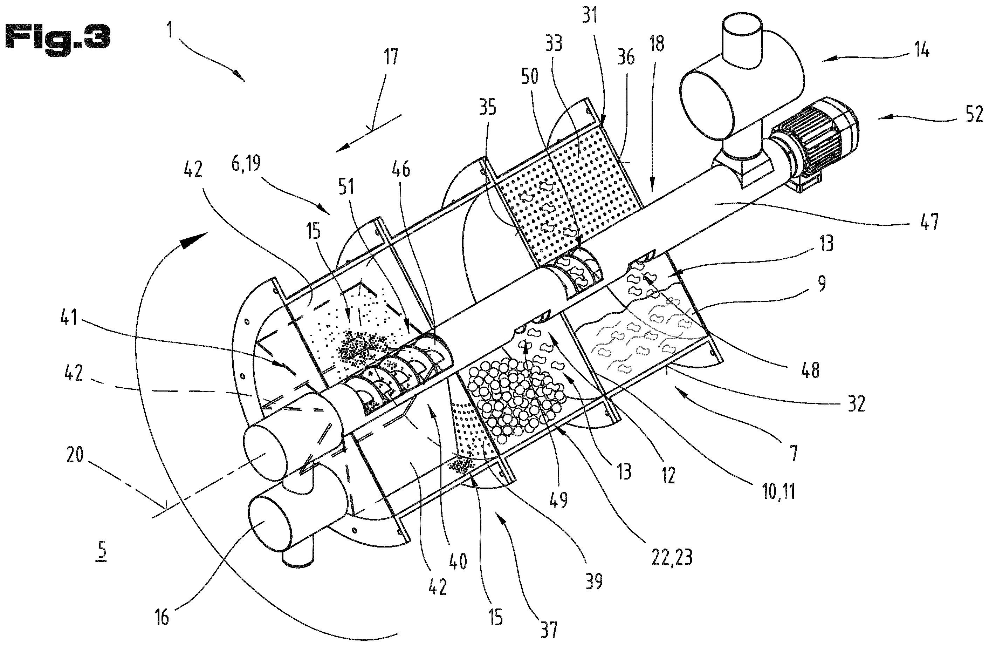

Wesentlich ist hierbei, dass die Abkühleinheit 2 und die Mahleinheit 4 in einem gemeinsamen, gegenüber einer Umgebung 5 versiegelten Gehäuse 6 angeordnet sind, wie dies aus der Fig. 1 ersichtlich ist. Die Abkühleinheit 2 ist durch zumindest eine in dem Gehäuse 6 ausgestaltete bzw. angeordnete Kühlzone 7 gebildet, und die Mahleinheit 4 ist durch zumindest eine in dem Gehäuse 6 angeordnete Mahlzone 8 gebildet. Bei dem in der Fig. 1 dargestellten Ausführungsbeispiel ist eine Kühlzone 7 vorgesehen, und sind zwei Mahlzonen 8 angeordnet. Es versteht sich von selbst, dass auch mehr als eine Kühlzone 7 und nur eine Mahlzone 8 oder mehr als zwei Mahlzonen 8 vorgesehen sein können. Bei den in der Fig. 2 und der Fig. 3 dargestellten Ausführungsbeispielen ist zum Beispiel nur jeweils eine in dem Gehäuse 6 angeordnete Mahlzone 8 vorgesehen.

In der Fig. 2 und der Fig. 3 sind ausschnittsweise weitere Ausführungsbeispiele für die Vorrichtung 1 dargestellt, wobei die Fig. 2 und Fig. 3 zur besseren Veranschaulichung des Inneren des Gehäuses 6 der Vorrichtung 1 selbiges in offener, schaubildlicher Darstellung gezeigt ist. In der Realität ist das Gehäuse 6 selbstverständlich geschlossen, bzw. wie erwähnt gegenüber der Umgebung 5 versiegelt. In der Fig. 2 und der Fig. 3 werden für gleiche Teile gleiche Bezugszeichen bzw. Bauteilbezeichnungen wie in der Fig. 1 verwendet werden. Um unnötige Wiederholungen zu vermeiden, wird auf die detaillierte Beschreibung in der Fig. 1 hingewiesen bzw. Bezug genommen.

Wie am besten anhand der Fig. 2 und der Fig. 3 ersichtlich ist, sind die zumindest eine Kühlzone 7 und die zumindest eine Mahlzone 8 gasaustauschtechnisch bzw. druckausgleichtechnisch miteinander verbunden. Um ein unerwünschtes Übertreten von festem oder flüssigem Kühlmedium 9 hintanzuhalten ist zwischen der zumindest einen Kühlzone 7 und der zumindest einen Mahlzone 8 eine Übertrittssperre 10 für festes oder flüssiges Kühlmedium 9 angeordnet. Die Übertrittsperre 10 kann etwa durch eine zwischen der zumindest einen Kühlzone 7 und der zumindest einen Mahlzone 8 angeordnete Zwischen- bzw. Trennplatte 11 gebildet sein, wobei in einer solchen Trennplatte 11 mindestens eine Öffnung 12 bzw. Durchbohrung ausgebildet ist, um die beiden Zonen 7, 8 druck- bzw. gasaustauschtechnisch miteinander zu verbinden.

Wie am besten durch Zusammenschau der Fig. 1 bis Fig. 3 erkennbar ist, ist zum Einbringen des Aufbereitungsguts 13 in das Gehäuse 6 ist eine Eintragsschleuse 14 vorgesehen bzw. angeordnet. Zum Austragen von zerkleinertem Gut 15 ist eine Austragsschleuse 16 vorgesehen. Die Eintragsschleuse 14 und die Austragsschleuse 16 können vorzugsweise durch Zellenradschleusen gebildet sein.

Zum Transfer des Aufbereitungsguts 13 in einer Transportrichtung 17 zunächst von der Eintragsschleuse 14 in die zumindest eine Kühlzone 7 und folgend von der zumindest einen Kühlzone 7 in die zumindest eine Mahlzone 8 ist eine Transportstrecke 18 ausgebildet. Eine bevorzugte Ausgestaltungsform dieser Transportstrecke wird nachfolgend noch näher erläutert.

Wie am besten anhand der Fig. 1 ersichtlich ist, kann das Gehäuse 6 vorzugsweise durch einen gegenüber der Umgebung 5 versiegelten Hohlzylinder 19 gebildet sein. Dieser Hohlzylinder 19 kann hierbei derart gelagert sein, dass eine Zylindermittelachse 20 des Hohlzylinders 19 zumindest im Wesentlichen parallel zu einer Aufstandsfläche 21 für den Hohlzylinder 19 verläuft. Die Zylindermittelachse 20 des Hohlzylinders 19 kann bei entsprechender Lagerung des Hohlzylinders 19 also parallel bzw. zumindest annähernd parallel zur Aufstandsfläche 21 orientiert sein, oder kann gegenüber der Aufstandsfläche 21 leicht geneigt sein. Falls eine leicht geneigte Lagerung des Hohlzylinders 19 gewählt wird, kann ein im Bereich der Austragsschleuse 16 angeordneter Teil der Zylindermittelachse 20 näher an der Aufstandsfläche 21 positioniert sein, als ein im Bereich der Eintragsschleuse 14 angeordneter Teil der Zylindermittelachse 20. Auf diese Weise kann die Schwerkraft zur Fortbewegung des Aufbereitungsguts 13 bzw. von zerkleinerten Gut 15 genutzt werden, und ist ein Rückfluss in Gegenrichtung zur Transportrichtung 17 vorteilhafterweise hintangehalten. Vorzugsweise kann jedoch der Hohlzylinder 19 mit paralleler bzw. zumindest annähernd paralleler Ausrichtung der Zylindermittelachse 20 zur Aufstandsfläche 21 gewählt werden. Als Mahlmittel kann in der oder den Mahlzonen 8 des Hohlzylinders 19 im Prinzip eine rotierende Mahlvorrichtung wie etwa eine rotierende Hammermühle angeordnet sein.

Wie in der Fig. 2 und Fig. 3 dargestellt ist, können vorzugsweise aber in der zumindest einen Mahlzone 8, oder in den Mahlzonen 8, als Mahlmittel 22 Mahlkörper 23 angeordnet sein, und kann vorgesehen sein, dass der Hohlzylinder 19 um die Zylindermittelachse 20 rotierbar gelagert ist, wie dies anhand des geschwungenen Pfeiles in der Fig. 2 und Fig. 3 jeweils veranschaulicht ist. Zum Rotieren des Hohlzylinders 19 kann eine Antriebsvorrichtung 24 angeordnet sein, wie dies in der Fig. 1 veranschaulicht ist. Die Mahlkörper 23 können zum Beispiel wie in der Fig. 2 und der Fig. 3 gezeigt, zum Beispiel durch Mahlkugeln gebildet sein. In anderen Worten ausgedrückt kann die zumindest eine Mahlzone 8 als Kugelmühle ausgebildet sein. Es können wie in der Fig. 1 angedeutet aber auch mehrere Mahlzonen 8 in Transportrichtung 17 hintereinander ausgebildet sein, in welchen Mahlzonen 8 zum Beispiel jeweils unterschiedliche Mahlkörper 23 oder andere Mahlvorrichtungen angeordnet sein können. So können zum Beispiel in der unmittelbar an die zumindest eine Kühlzone 7 angrenzende Mahlzone 8 relativ große Mahlkörper, beispielsweise Mahlstäbe angeordnet sein, um eine Grobzerkleinerung des Aufbereitungsguts 13 zu bewerkstelligen. In einer in Transportrichtung 17 nachfolgend auf diese Mahlzone 8 angeordnete, weitere Mahlzone 8 können kleinere Mahlkörper, zum Beispiel kleine Mahlkugeln angeordnet sein, um eine Feinzerkleinerung des Aufbereitungsguts 13 zu bewerkstelligen. Auf diese Weise kann eine Mahlzonen-Kaskade bereitgestellt werden, wobei das Aufbereitungsgut 13 im Betrieb der Vorrichtung 1 bei rotierendem Hohlzylinder 19 bzw. Gehäuse 6 zum Beispiel durch Verdrängung über zwischen den Mahlzonen 8 angeordnete Überlaufwehre 25, siehe Fig. 2 oder Siebplatten 26, siehe Fig. 3 übertritt.

Wie in der Fig. 2 dargestellt ist, kann die Transportstrecke 18 vorzugsweise eine entlang der Zylindermittelachse 20 des Hohlzylinders 19 verlaufend angeordnete, ummantelte Förderschnecke 27 umfassen. Hierbei kann eine Ummantelung 28 der Förderschnecke 27 im Bereich der zumindest einen Kühlzone 7 eine in Richtung der Aufstandsfläche 21 für den Hohlzylinder 19 weisende Austrittsöffnung 29 für das Aufbereitungsgut 13 aufweisen. Im Betrieb der Vorrichtung 1 kann das Aufbereitungsgut hierdurch in einfacher Weise in die zumindest eine Kühlzone 7 transportiert werden, indem das Aufbereitungsgut 13 via die Austrittsöffnung 29 in die zumindest eine Kühlzone 7 bzw. bevorzugt direkt in vorgelegtes, flüssiges Kühlmedium 9 in der zumindest einen Kühlzone 7 hineinfällt.

Wie weiters am besten anhand der Fig. 2 ersichtlich ist, kann die ummantelte Förderschnecke 27 im Betrieb der Vorrichtung 1 vorteilhafterweise auch für den Transport des Aufbereitungsguts 13 von der zumindest einen Kühlzone 7 in die zumindest eine Mahlzone 8 vorgesehen sein. Hierzu kann wie dargestellt die Ummantelung 28 der Förderschnecke 27 im Bereich der zumindest einen Kühlzone 7 eine in Transportrichtung 17 nach der Austrittsöffnung 29 angeordnete, von der Aufstandsfläche 21 wegweisende Eintrittsöffnung 30 für das Aufbereitungsgut 13 aufweisen. In Kombination hiermit kann in der zumindest einen Kühlzone 7 als Hebevorrichtung 31 für das Aufbereitungsgut 13 wenigstens eine perforierte, an einem umlaufenden Zylindermantel 32 des Hohlzylinders 19 befestigte und radial in Richtung der Zylindermittelachse 20 oder in einem Winkel zu der Zylindermittelachse 20 in die zumindest eine Kühlzone 7 hineinragende Mitnehmerplatte 33 angeordnet sein.

Im Betrieb der Vorrichtung 1 nimmt die wenigstens eine Mitnehmerplatte 33 jeweils einmal pro vollständiger Rotation des Hohlzylinders 19 Aufbereitungsgut 13 aus dem unteren Endbereich der zumindest einen Kühlzone 7 auf, und befördert das Aufbereitungsgut 13 nach einer weiteren Rotation des Hohlzylinders 19 um ca. 180 ° zumindest teilweise in die in der Ummantelung 28 der Förderschnecke 27 ausgestaltete Eintrittsöffnung 30, wodurch das Aufbereitungsgut 13 sodann mittels der Förderschnecke 27 weiter in Transportrichtung 17 in die zumindest eine Mahlzone transportiert werden kann. Die Mitnehmerplatte 33 durchläuft zur Mitnahme von Aufbereitungsgut 13 vorzugsweise flüssiges Kühlmedium 9 im unteren Bereich der zumindest einen Kühlzone 7, wobei das flüssige Kühlmedium 9 aufgrund der Perforation der Mitnehmerplatte 33 nicht mitgenommen wird, sondern in der zumindest einen Kühlzone 7 verbleibt. Die Perforation der Mitnehmerplatte kann grundsätzlich geometrisch beliebig gewählt werden, solange die Perforation derart gewählt bzw. dimensioniert ist, dass das Aufbereitungsgut bzw. dessen Stücke nicht durch die Löcher bzw. Durchbohrungen der Mitnehmerplatte hindurch gelangen können, jedoch flüssiges Kühlmedium, wie Eiswasser oder flüssiger Stickstoff durch die Löcher gelangen kann. Zum Entleeren des Aufbereitungsguts in die zumindest eine Mahlzone 8 kann wie in Fig. 2 dargestellt die Ummantelung 28 der Förderschnecke 27 eine in die zumindest eine Mahlzone 8 mündende oder hineinragende Austragsöffnung 34 für das Aufbereitungsgut 13 aufweisen.

Die wenigstens eine Mitnehmerplatte 33 kann grundsätzlich derart in der zumindest einen Kühlzone 7 angeordnet sein, dass quer zur Zylindermittelachse 20 de Hohlzylinders 19 verlaufende Kanten 35, 36 der Mitnehmerplatte 33 in einer Rotationsrichtung des Hohlzylinders 19 auf gleicher Höhe laufen, wie dies anhand der Fig. 2 erkennbar ist. Die wenigstens eine Mitnehmerplatte 33 kann aber auch derart gekippt in dem Hohlzylinder 19 angeordnet sein, dass in Rotationsrichtung des Hohlzylinders 19 die zur zumindest einen Mahlzone 8 weisende Kante 35 der Mitnehmerplatte 33 der von der zumindest einen Mahlzone 8 wegweisenden Kante 36 der Mitnehmerplatte 33 nacheilt, wie dies in der Fig. 1 angedeutet ist. Diese Anordnung kann insbesondere bei Lagerung des Hohlzylinders 19 mit parallel zur Aufstandsfläche 21 ausgerichteter Zylindermittelachse 20 von Vorteil sein, da das Aufbereitungsgut 13 hierdurch im Betrieb der Vorrichtung 1 bzw. bei Rotation des Hohlzylinders 19 schwerkraftbedingt auf der Mitnehmerplatte 33 in Richtung der Eintrittsöffnung 30 der Ummantelung 28 der Förderschnecke 27 gedrängt bzw. bewegt werden kann.

Wie aus der Fig. 2 bzw. der Fig. 1 ersichtlich ist, kann in dem Gehäuse 6 in Transportrichtung 17 folgend auf die zumindest eine Mahlzone 8, siehe Fig. 2, oder folgend auf eine in Transportrichtung 17 letztangeordnete Mahlzone 8, siehe Fig. 1, eine Austragszone 37 für zerkleinertes Gut 38 angeordnet sein. Hierbei kann zwischen der zumindest einen Mahlzone 8 oder der in Transportrichtung 17 letztangeordneten Mahlzone 8 und der Austragszone 37 eine umlaufende Überlaufwehr 39 angeordnet sein, wie dies in Fig. 1 angedeutet ist. Alternativ kann zwischen der zumindest einen Mahlzone 8 oder der in Transportrichtung 17 letztangeordneten Mahlzone 8 und der Austragszone 37 zum Beispiel eine umlaufende Siebplatte 40 angeordnet sein, wie dies in der Fig. 2 dargestellt ist. Durch die Überlaufwehr 39 oder die Siebplatte 40 kann im Betrieb der Vorrichtung 1 ein unerwünschtes Übertreten von Mahlkörpern 23 in die Austragszone 37 hintangehalten werden. Bei Anordnung einer Siebplatte 40 kann auch ein Übertreten von zu großem Gut 38 in die Austragszone 37 hintangehalten werden.

Des Weiteren kann zum Transfer des zerkleinerten Guts 15 aus der Austragszone 37 zu der Austragsschleuse 16 eine weitere Transportstrecke 40 ausgebildet sein. Eine solche, weitere Transportstrecke 40 kann zum Beispiel durch eine nicht dargestellte Materialrutsche für das zerkleinerte Gut 15 gebildet sein, welche Materialrutsche zur Austragsschleuse 16 hin in Richtung der Aufstandsfläche 21 für die Vorrichtung 1 geneigt in dem Gehäuse 6 bzw. dem Hohlzylinder 19 angeordnet ist. Zum Aufbringen des zerkleinerten Guts 15 auf die weitere Transportstrecke 40 kann als Hebevorrichtung 41 für das zerkleinerte Gut 15 mindestens eine an einem umlaufenden Zylindermantel 32 des Hohlzylinders 19 befestigte und radial in Richtung der Zylindermittelachse 20 oder in einem Winkel zu der Zylindermittelachse 20 in die Austragszone 37 hineinragende Hebeplatte 42 angeordnet sein, wobei zwecks möglichst gleichmäßiger Austragung des zerkleinerten Guts 15 wie in Fig. 2 dargestellt vorzugsweise mehrere solche Hebeplatten 42 angeordnet sein können.

Wie außerdem in der Fig. 2 dargestellt ist, kann die weitere Transportstrecke 40 anstatt einer Materialrutsche eine entlang der Zylindermittelachse 20 des Hohlzylinders 19 verlaufend angeordnete, weitere ummantelte Förderschnecke 43 umfassen. Eine Ummantelung 44 dieser weiteren Förderschnecke 43 kann wiederum im Bereich der Austragszone 37 eine von einer Aufstandsfläche 21 für den Hohlzylinder 19 wegweisende Eintrittsöffnung 45 für das zerkleinerte Gut 15 aufweisen. Die Ummantelung 44 der weiteren Förderschnecke 43 kann im Bereich der Austragsschleuse 16 eine Austragsöffnung für zerkleinertes Gut 15 aufweisen, sodass das zerkleinerte Gut 15 via die Austragschleuse 16 aus dem Gehäuse 6 austragbar ist.

Das in der Fig. 3 dargestellte Ausführungsbeispiel stellt eine alternative Ausgestaltungsvariante der Realisierung der Transportstrecken 18, 40 für Aufbereitungsgut 13 und zerkleinertes Gut 15 in dem Gehäuse 6 bzw. Hohlzylinder 19 dar. Bei diesem alternativen Ausführungsbeispiel kann wie aus Fig. 3 ersichtlich vorgesehen sein, dass die Transportstrecke 18 und die weitere Transportstrecke 40 eine gemeinsame, entlang der Zylindermittelachse 20 durchgehend durch alle Zonen 7, 8, 37 verlaufend angeordnete, ummantelte Förderschnecke 46 umfassen. Eine Ummantelung 47 dieser Förderschnecke 46 kann im Bereich der zumindest einen Kühlzone 7 eine in Richtung einer Aufstandsfläche 21 für den Hohlzylinder 19 weisende, erste Austrittsöffnung 48 für das Aufbereitungsgut 13 aufweisen, und kann im Bereich der zumindest einen Mahlzone 8 eine in Richtung einer Aufstandsfläche 21 für den Hohlzylinder 19 weisende, zweite Austrittsöffnung 49 für das Aufbereitungsgut 13 aufweisen. Des Weiteren kann die Ummantelung 47 dieser Förderschnecke 46 im Bereich der zumindest einen Kühlzone 7 eine in Transportrichtung 17 nach der ersten Austrittsöffnung 48 angeordnete, von der Aufstandsfläche 21 wegweisende, erste Eintrittsöffnung 50 für das Aufbereitungsgut 13 aufweisen, und im Bereich der Austragszone 37 eine von der Aufstandsfläche 21 wegweisende, zweite Eintrittsöffnung 51 für das zerkleinerte Gut 15 aufweisen. Wiederum in der zumindest einen Kühlzone 7 als Hebevorrichtung 31 für das Aufbereitungsgut 13 wenigstens eine perforierte, an einem umlaufenden Zylindermantel 32 des Hohlzylinders 19 befestigte und radial in Richtung der Zylindermittelachse 20 oder in einem Winkel zu der Zylindermittelachse 20 in die zumindest eine Kühlzone 7 hineinragende Mitnehmerplatte 33 angeordnet sein. Außerdem kann wie auch in Fig. 3 dargestellt ist in der Austragszone 37 als Hebevorrichtung 41 für das zerkleinerte Gut 15 mindestens eine an einem umlaufenden Zylindermantel 32 des Hohlzylinders 19 befestigte und radial in Richtung der Zylindermittelachse 20 oder in einem Winkel zu der Zylindermittelachse 20 in die Austragszone 37 hineinragende Hebeplatte 42 angeordnet.

Im Betrieb der Vorrichtung 1 entspricht die Wirkweise der gemeinsamen Förderschnecke 46 im Wesentlichen jener, wie obenstehend zu dem in der Fig. 2 dargestellten Ausführungsbeispiel bereits beschrieben ist. Auch die weiteren Elemente, mit Ausnahme der Ausgestaltung der gemeinsamen Förderschnecke 46 bzw. deren Ummantelung 47 im Vergleich zu den Förderschnecken 27, 43 gemäß dem in der Fig. 2 dargestellten Ausführungsbeispiel, gleichen im Wesentlichen den bereits obenstehend in Zusammenhang mit dem in der Fig. 2 dargestellten Ausführungsbeispiel beschriebenen Elementen, weshalb in der Fig. 2 und der Fig. 3 auch für im Wesentlichen gleiche Elemente dieselben Bezugszeichen vergeben sind. Eine nochmalige Beschreibung dieser im Wesentlichen gleichen Elementen kann an dieser Stelle erübrigt werden.

Sowohl die Förderschnecke 27 und die weitere Förderschnecke 43 gemäß dem in der Fig. 2 dargestellten Ausführungsbespiel, als auch die gemeinsame Förderschnecke 46 gemäß dem in der Fig. 3 dargestellten Ausführungsbeispiel können jeweils mittels extern des Gehäuses 6 bzw. Hohlzylinders 19 angebrachte Antriebsorganen 52 angetrieben sein.

Wie im Falle des Ausführungsbeispiels gemäß Fig. 2 kann die wenigstens eine Mitnehmerplatte 33 auch bei dem in der Fig. 3 dargestellten Ausführungsbeispiel derart in der zumindest einen Kühlzone 7 angeordnet sein, dass quer zur Zylindermittelachse 20 de Hohlzylinders 19 verlaufende Kanten 35, 36 der Mitnehmerplatte 33 in einer Rotationsrichtung des Hohlzylinders 19 auf gleicher Höhe laufen, wie dies anhand der Fig. 3 erkennbar ist. Alternativ kann die wenigstens eine Mitnehmerplatte 33 wiederum aber auch bei dem in der Fig. 3 dargestellten Ausführungsbeispiel derart gekippt in dem Hohlzylinder 19 angeordnet sein, dass in Rotationsrichtung des Hohlzylinders 19 die zur zumindest einen Mahlzone 8 weisende Kante 35 der Mitnehmerplatte 33 der von der zumindest einen Mahlzone 8 wegweisenden Kante 36 der Mitnehmerplatte 33 nacheilt, wie dies in der Fig. 1 angedeutet ist.

Wie in der Fig. 1 dargestellt ist kann bei der Vorrichtung 1 eine von einem Austragsbereich 53 zu einer eingangsseitig angeordneten Vorkühlkammer 54 um das Gehäuse 6 geführte Rezirkulationsleitung 55 ausgebildet sein. Diese Rezirkulationsleitung 55 kann bypassartig um das Gehäuse 6 herumgeführt sein. Im Betrieb der Vorrichtung 1 kann über die Rezirkulationsleitung 55 kaltes, gasförmiges Kühlmedium über die vom Austragsbereich 53 bzw. vom Bereich der Austragsschleuse 16 zum Eintragsbereich bzw. in die Vorkühlkammer 54 gelangen, und hiermit Aufbereitungsgut 13 bereits in dieser Vorkühlkammer 54 gekühlt werden. Insgesamt kann mittels der Rezirkulationsleitung 55 eine kalte Atmosphäre von der Vorkühlkammer 54 bis zum Austragsbereich 53 hergestellt werden.

Außerdem kann im Bereich der Vorkühlkammer 54 ein Überdruckventil 56 vorgesehen sein. Im Betrieb der Vorrichtung 1 kann dieses Überdruckventil 56 bei einem Überdruck im Gehäuse geöffnet werden.

Wie weiters in der Fig. 1 dargestellt ist, kann unterhalb der Austragsschleuse 16 eine Siebvorrichtung 57 angeordnet sein. Im Betrieb der Vorrichtung 1 kann aus dem Gehäuse 6 ausgebrachtes, zerkleinertes Gut 15 noch in tiefkaltem Zustand gesiebt werden. Von Vorteil ist hierbei insbesondere, dass etwaig ausgesiebtes bzw. zu grobes Gut 15 noch im kalten Zustand zur neuerlichen bzw. wiederholten Mahlung wieder in das Gehäuse verbracht werden kann.

Zu diesem Zweck kann auch eine Rückführ-Vorrichtung 58 zum Rückführen von ausgesiebten Gut vorgesehen sein. Eine derartige Rückführ-Vorrichtung 58 kann zum Beispiel ein Förderband 59 und eine Hub- und Entleer-Vorrichtung 60 zum Einbringen des zurückzuführenden Guts in ein Vorratsbehältnis 61 umfassen. Ein Vorratsbehältnis 61 kann hierbei zum Beispiel durch einen eingangsseitig bzw. oberhalb der Eintragsschleuse angeordneten Materialtrichter 62 gebildet sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Vorrichtung | 31 | Hebevorrichtung |
| 2 | Abkühleinheit | 32 | Zylindermantel |
| 3 | Zuführmittel | 33 | Mitnehmerplatte |
| 4 | Mahleinheit | 34 | Austragsöffnung |
| 5 | Umgebung | 35 | Kante |
| 6 | Gehäuse | 36 | Kante |
| 7 | Kühlzone | 37 | Austragszone |
| 8 | Mahlzone | 38 | Überlaufwehr |
| 9 | Kühlmedium | 39 | Siebplatte |
| 10 | Übertrittssperre | 40 | Transportstrecke |
| 11 | Trennplatte | 41 | Hebevorrichtung |
| 12 | Öffnung | 42 | Hebeplatte |
| 13 | Aufbereitungsgut | 43 | Förderschnecke |
| 14 | Eintragsschleuse | 44 | Ummantelung |
| 15 | Gut | 45 | Eintrittsöffnung |
| 16 | Austragsschleuse | 46 | Förderschnecke |
| 17 | Transportrichtung | 47 | Ummantelung |
| 18 | Transportstrecke | 48 | Austrittsöffnung |
| 19 | Hohlzylinder | 49 | Austrittsöffnung |
| 20 | Zylindermittelachse | 50 | Eintrittsöffnung |
| 21 | Aufstandsfläche | 51 | Eintrittsöffnung |
| 22 | Mahlmittel | 52 | Antriebsorgan |
| 23 | Mahlkörper | 53 | Austragsbereich |
| 24 | Antriebsvorrichtung | 54 | Vorkühlkammer |
| 25 | Überlaufwehr | 55 | Rezirkulationsleitung |
| 26 | Siebplatte | 56 | Überdruckventil |
| 27 | Förderschnecke | 57 | Siebvorrichtung |
| 28 | Ummantelung | 58 | Rückführvorrichtung |
| 29 | Austrittsöffnung | 59 | Förderband |
| 30 | Eintrittsöffnung | 60 | Hub- und Entleervorrichtung |
| 61 | Vorratsbehältnis | | |
| 62 | Materialtrichter | | |

## Patentansprüche

1. Vorrichtung (1) zum Kühlen und Mahlen von Aufbereitungsgut (13), umfassend
eine Abkühleinheit (2) zum Abkühlen des Aufbereitungsguts (13) mit einem Zuführmittel (3) zum Zuführen eines Kühlmediums (9),
eine Mahleinheit (4) mit wenigstens einem Mahlmittel (22) zum Zerkleinern des Aufbereitungsguts (13),
wobei die Abkühleinheit (2) und die Mahleinheit (4) in einem gemeinsamen, gegenüber einer Umgebung (5) versiegelten Gehäuse (6) angeordnet sind, wobei zum Einbringen des Aufbereitungsguts (13) eine Eintragsschleuse (14) und zum Austragen von zerkleinerten Gut (15) eine Austragsschleuse (16) vorgesehen sind,
und wobei die Abkühleinheit (2) durch zumindest eine im Inneren des Gehäuses (6) angeordnete Kühlzone (7) gebildet ist und die Mahleinheit (4) durch zumindest eine im Inneren des Gehäuses (6) angeordnete Mahlzone (8) gebildet ist, welche zumindest eine Kühlzone (7) und welche zumindest eine Mahlzone (8) gasaustauschtechnisch miteinander verbunden sind,
und wobei das Gehäuse (6) durch einen gegenüber der Umgebung (5) versiegelten Hohlzylinder (19) gebildet ist, welcher Hohlzylinder (19) derart gelagert ist, dass eine Zylindermittelachse (20) des Hohlzylinders (19) zumindest im Wesentlichen parallel zu einer Aufstandsfläche (21) für den Hohlzylinder (19) verläuft, und wobei der Hohlzylinder (19) um die Zylindermittelachse (20) rotierbar gelagert ist, und dass in der zumindest einen Mahlzone (8) oder in den Mahlzonen (8) als Mahlmittel (22) Mahlkörper (23) angeordnet sind,
**dadurch gekennzeichnet, dass**
zwischen der zumindest einen Kühlzone (7) und der zumindest einen Mahlzone (8) eine Übertrittssperre (10) für festes oder flüssiges Kühlmedium (9) angeordnet ist,
wobei eine Transportstrecke (18) zum Transfer des Aufbereitungsguts (13) in einer Transportrichtung (17) von der Eintragsschleuse (14) in die zumindest eine Kühlzone (7) und von der zumindest einen Kühlzone (7) in die zumindest eine Mahlzone (8) ausgebildet ist.

2. Vorrichtung nach Anspruch 1, **dadurch gekennzeichnet, dass** die Transportstrecke (18) eine entlang der Zylindermittelachse (20) des Hohlzylinders (19) verlaufend angeordnete, ummantelte Förderschnecke (27) umfasst, wobei eine Ummantelung (28) der Förderschnecke (27) im Bereich der zumindest einen Kühlzone (7) eine in Richtung einer Aufstandsfläche (21) für den Hohlzylinder (19) weisende Austrittsöffnung (29) für das Aufbereitungsgut (13) aufweist.

3. Vorrichtung nach Anspruch 2, **dadurch gekennzeichnet, dass** die Ummantelung (28) der Förderschnecke (27) im Bereich der zumindest einen Kühlzone (7) eine in Transportrichtung (17) nach der Austrittsöffnung (29) angeordnete, von der Aufstandsfläche (21) wegweisende Eintrittsöffnung (30) für das Aufbereitungsgut (13) aufweist, wobei in der zumindest einen Kühlzone (7) als Hebevorrichtung (31) für das Aufbereitungsgut (13) wenigstens eine perforierte, an einem umlaufenden Zylindermantel (32) des Hohlzylinders (19) befestigte und radial in Richtung der Zylindermittelachse (20) oder in einem Winkel zu der Zylindermittelachse (20) in die zumindest eine Kühlzone (7) hineinragende Mitnehmerplatte (33) angeordnet ist, und wobei die Ummantelung (28) der Förderschnecke (27) eine in die zumindest eine Mahlzone (8) mündende oder hineinragende Austragsöffnung (34) für das Aufbereitungsgut (13) aufweist.

4. Vorrichtung nach einem der vorhergehenden Ansprüche, **dadurch gekennzeichnet, dass** in dem Gehäuse (6) in Transportrichtung (17) folgend auf die zumindest eine Mahlzone (8) oder folgend auf eine in Transportrichtung (17) letztangeordnete Mahlzone (8) eine Austragszone (37) für zerkleinertes Gut (15) angeordnet ist, wobei zwischen der zumindest einen Mahlzone (8) oder der in Transportrichtung (17) letztangeordneten Mahlzone (8) und der Austragszone (37) eine umlaufende Überlaufwehr (38) oder eine umlaufende, perforierte Siebplatte (39) angeordnet ist.

5. Vorrichtung nach Anspruch 4, **dadurch gekennzeichnet, dass** eine weitere Transportstrecke (40) zum Transfer des zerkleinerten Guts (15) aus der Austragszone (37) zu der Austragsschleuse (16) ausgebildet ist, wobei in der Austragszone (37) als Hebevorrichtung (41) für das zerkleinerte Gut (15) mindestens eine an einem umlaufenden Zylindermantel (32) des Hohlzylinders (19) befestigte und radial in Richtung der Zylindermittelachse (20) oder in einem Winkel zu der Zylindermittelachse (20) in die Austragszone (37) hineinragende Hebeplatte (42) angeordnet ist.

6. Vorrichtung nach Anspruch 5, **dadurch gekennzeichnet, dass** die weitere Transportstrecke (40) eine entlang der Zylindermittelachse (20) des Hohlzylinders (19) verlaufend angeordnete, weitere ummantelte Förderschnecke (43) umfasst, wobei eine Ummantelung (44) der weiteren Förderschnecke (43) im Bereich der Austragszone (37) eine von einer Aufstandsfläche (21) für den Hohlzylinder (19) wegweisende Eintrittsöffnung (45) für das zerkleinerte Gut (15) aufweist.

7. Vorrichtung nach Anspruch 5, **dadurch gekennzeichnet, dass** die Transportstrecke (18) und die weitere Transportstrecke (40) eine gemeinsame, entlang der Zylindermittelachse (20) durchgehend durch alle Zonen (7, 8, 37) verlaufend angeordnete, ummantelte Förderschnecke (46) umfassen, wobei eine Ummantelung (47) dieser Förderschnecke (46) im Bereich der zumindest einen Kühlzone (7) eine in Richtung einer Aufstandsfläche (21) für den Hohlzylinder (19) weisende, erste Austrittsöffnung (48) für das Aufbereitungsgut (13) aufweist und im Bereich der zumindest einen Mahlzone (8) eine in Richtung einer Aufstandsfläche (21) für den Hohlzylinder (19) weisende, zweite Austrittsöffnung (49) für das Aufbereitungsgut (13) aufweist, und wobei die Ummantelung (47) dieser Förderschnecke (46) im Bereich der zumindest einen Kühlzone (7) eine in Transportrichtung (17) nach der ersten Austrittsöffnung (48) angeordnete, von der Aufstandsfläche (21) wegweisende, erste Eintrittsöffnung (50) für das Aufbereitungsgut (13) aufweist und im Bereich der Austragszone (37) eine von der Aufstandsfläche (21) wegweisende, zweite Eintrittsöffnung (51) für das zerkleinerte Gut (15) aufweist, wobei in der zumindest einen Kühlzone (7) als Hebevorrichtung (31) für das Aufbereitungsgut (13) wenigstens eine perforierte, an einem umlaufenden Zylindermantel (32) des Hohlzylinders (19) befestigte und radial in Richtung der Zylindermittelachse (20) oder in einem Winkel zu der Zylindermittelachse (20) in die zumindest eine Kühlzone (7) hineinragende Mitnehmerplatte (33) angeordnet ist, und wobei in der Austragszone (37) als Hebevorrichtung (41) für das zerkleinerte Gut (15) mindestens eine an einem umlaufenden Zylindermantel (32) des Hohlzylinders (19) befestigte und radial in Richtung der Zylindermittelachse (20) oder in einem Winkel zu der Zylindermittelachse (20) in die Austragszone (37) hineinragende Hebeplatte (42) angeordnet ist.

8. Vorrichtung nach einem der vorhergehenden Ansprüche, **dadurch gekennzeichnet, dass** eine von einem Austragsbereich (53) zu einer eingangsseitig angeordneten Vorkühlkammer (54) um das Gehäuse (6) geführte Rezirkulationsleitung (55) ausgebildet ist.

## Claims

1. A device (1) for cooling and grinding material to be processed (13), comprising
a cooling unit (2) for cooling the material to be processed (13) with a supply means (3) for supplying a cooling medium (9),
a grinding unit (4) with at least one grinding means (22) for comminuting the material to be processed (13),
wherein the cooling unit (2) and the grinding unit (4) are arranged in a common housing (6) sealed from an environment (5), wherein an inlet sluice (14) is provided for introducing the material to be processed (13) and a discharge sluice (16) is provided for discharging the comminuted material (15),
and wherein the cooling unit (2) is formed by at least one cooling zone (7) arranged inside the housing (6) and the grinding unit (4) is formed by at least one grinding zone (8) arranged inside the housing (6), which at least one cooling zone (7) and which at least one grinding zone (8) are connected to one another in terms of gas exchange,
and wherein the housing (6) is formed by a hollow cylinder (19) sealed with respect to the environment (5), which hollow cylinder (19) is mounted such that a cylinder center axis (20) of the hollow cylinder (19) extends at least substantially parallel to a contact surface (21) for the hollow cylinder (19),
and wherein the hollow cylinder (19) is mounted so as to be rotatable about the cylinder center axis (20), and that grinding bodies (23) are arranged in the at least one grinding zone (8) or in the grinding zones (8) as grinding means (22),
**characterized in that**
a transfer barrier (10) for solid or liquid cooling medium (9) is arranged between the at least one cooling zone (7) and the at least one grinding zone (8),
wherein a transport path (18) is formed for transferring the material to be processed (13) in a transport direction (17) from the inlet sluice (14) into the at least one cooling zone (7) and from the at least one cooling zone (7) into the at least one grinding zone (8).

2. The device according to claim 1, **characterized in that** the transport path (18) comprises a jacketed screw conveyor (27) arranged running along the cylinder center axis (20) of the hollow cylinder (19), wherein a jacket (28) of the screw conveyor (27) in the region of the at least one cooling zone (7) has an outlet opening (29) for the material to be processed (13) pointing in the direction of a contact surface (21) for the hollow cylinder (19).

3. The device according to claim 2, **characterized in that** the jacket (28) of the screw conveyor (27), in the region of the at least one cooling zone (7), has an inlet opening (30) for the material to be processed (13) which is arranged downstream of the outlet opening (29) in the transport direction (17) and points away from the contact surface (21), wherein in the at least one cooling zone (7), as a lifting device (31) for the material to be processed (13), at least one perforated carrier plate (33) is provided, which is fastened to a circumferential cylinder jacket (32) of the hollow cylinder (19) and projects radially in the direction of the cylinder center axis (20) or at an angle to the cylinder center axis (20) into the at least one cooling zone (7), and wherein the jacket (28) of the screw conveyor (27) has a discharge opening (34) for the material to be processed (13) which opens into or projects into the at least one grinding zone (8).

4. The device according to one of the preceding claims, **characterized in that** a discharge zone (37) for comminuted material (15) is arranged in the housing (6) following the at least one grinding zone (8) in the transport direction (17) or following a grinding zone (8) arranged last in the transport direction (17), wherein a circumferential overflow weir (38) or a circumferential, perforated screen plate (39) is arranged between the at least one grinding zone (8) or the grinding zone (8) arranged last in the transport direction (17) and the discharge zone (37).

5. The device according to claim 4, **characterized in that** a further transport path (40) is formed for transferring the comminuted material (15) from the discharge zone (37) to the discharge sluice (16), wherein at least one lifting plate (42) is arranged in the discharge zone (37) as a lifting device (41) for the comminuted material (15), which lifting plate (42) is attached to a circumferential cylinder jacket (32) of the hollow cylinder (19) and projects radially in the direction of the cylinder center axis (20) or at an angle to the cylinder center axis (20) into the discharge zone (37).

6. The device according to claim 5, **characterized in that** the further transport path (40) comprises a further jacketed screw conveyor (43) arranged running along the cylinder center axis (20) of the hollow cylinder (19), wherein a jacket (44) of the further screw conveyor (43) in the region of the discharge zone (37) has an inlet opening (45) for the comminuted material (15) pointing away from a contact surface (21) for the hollow cylinder (19).

7. The device according to claim 5, **characterized in that** the transport path (18) and the further transport path (40) comprise a common jacketed screw conveyor (46) arranged continuously along the cylinder center axis (20) through all zones (7, 8, 37), wherein a jacket (47) of this screw conveyor (46), in the region of the at least one cooling zone (7), has a first outlet opening (48) for the material to be processed (13), which first outlet opening (48) points in the direction of a contact surface (21) for the hollow cylinder (19), and, in the region of the at least one grinding zone (8), has a second outlet opening (49) for the material to be processed (13), which second outlet opening (49) points in the direction of a contact surface (21) for the hollow cylinder (19), and wherein the jacket (47) of this screw conveyor (46), in the region of the at least one cooling zone (7), has a first inlet opening (50) for the material to be processed (13), which first inlet opening (50) is arranged downstream of the first outlet opening (48) in the transport direction (17) and points away from the contact surface (21), and, in the region of the discharge zone (37), has a second inlet opening (51) for the comminuted material (15), which second inlet opening (51) points away from the contact surface (21), wherein at least one perforated carrier plate (33) is arranged in the at least one cooling zone (7) as a lifting device (31) for the material to be processed (13), which carrier plate (33) is fastened to a circumferential cylinder jacket (32) of the hollow cylinder (19) and projects radially in the direction of the cylinder center axis (20) or at an angle to the cylinder center axis (20) into the at least one cooling zone (7), and wherein in the discharge zone (37), as a lifting device (41) for the comminuted material (15), at least one lifting plate (42) is arranged which is fastened to a circumferential cylinder jacket (32) of the hollow cylinder (19) and projects radially in the direction of the cylinder center axis (20) or at an angle to the cylinder center axis (20) into the discharge zone (37).

8. The device according to one of the preceding claims, **characterized in that** a recirculation line (55) guided from a discharge region (53) to a pre-cooling chamber (54) arranged on the inlet side is formed around the housing (6).

## Revendications

1. Dispositif (1) pour refroidir et broyer des matériaux à traiter (13), comprenant :
une unité de refroidissement (2) pour refroidir le matériau à traiter (13) avec un moyen d'alimentation (3) pour alimenter un milieu de refroidissement (9),
une unité de broyage (4) avec au moins un moyen de broyage (22) pour broyer le matériau à traiter (13),
dans lequel l'unité de refroidissement (2) et l'unité de broyage (4) sont disposées dans un boîtier (6) commun et scellé par rapport à un environnement (5), une écluse d'entrée (14) étant prévue pour introduire le matériau à traiter (13) et une écluse de sortie (16) étant prévue pour décharger le matériau broyé (15),
et dans lequel l'unité de refroidissement (2) est constituée d'au moins une zone de refroidissement (7) disposée à l'intérieur du boîtier (6), et l'unité de broyage (4) est constituée d'au moins une zone de broyage (8) disposée à l'intérieur du boîtier (6), cette au moins une zone de refroidissement (7) et cette au moins une zone de broyage (8) étant connectées entre elles en termes d'échange gazeux et dans lequel le boîtier (6) est constitué d'un cylindre creux (19) scellé par rapport à l'environnement (5), ce cylindre creux (19) étant monté de telle sorte qu'un axe central de cylindre (20) du cylindre creux (19) s'étend au moins essentiellement parallèlement à une surface d'appui (21) pour le cylindre creux (19) et dans lequel le cylindre creux (19) est monté de manière à pouvoir tourner autour de l'axe central de cylindre (20) et en ce que des corps de broyage (23) étant disposés comme moyen de broyage (22) dans l'au moins une zone de broyage (8) ou dans les zones de broyage (8),
**caractérisé en ce que**
une barrière de transfert (10) pour le milieu de refroidissement (9) solide ou liquide est disposée entre l'au moins une zone de refroidissement (7) et l'au moins une zone de broyage (8),
un trajet de transport (18) est formé pour le transfert du matériau à traiter (13) dans une direction de transport (17) depuis l'écluse d'entrée (14) vers l'au moins une zone de refroidissement (7) et depuis l'au moins une zone de refroidissement (7) vers l'au moins une zone de broyage (8).

2. Dispositif selon la revendication 1, **caractérisé en ce que** le trajet de transport (18) comprend une vis sans fin gainée (27) disposée le long de l'axe central du cylindre (20) du cylindre creux (19), un revêtement (28) de la vis sans fin (27) présentant, dans la zone de l'au moins une zone de refroidissement (7), une ouverture de sortie (29) pour le matériau à traiter (13) orientée vers une surface d'appui (21) pour le cylindre creux (19).

3. Dispositif selon la revendication 2, **caractérisé en ce que** le revêtement (28) de la vis sans fin (27) présente, dans la zone de l'au moins une zone de refroidissement (7), une ouverture d'entrée (30) pour le matériau à traiter (13) disposée dans la direction de transport (17) après l'ouverture de sortie (29) et orientée à l'opposé de la surface d'appui (21), au moins une plaque d'entraînement (33) perforée, fixée à une enveloppe cylindrique (32) du cylindre creux (19) et dépassant radialement en direction de l'axe central du cylindre (20) ou sous un angle par rapport à l'axe central du cylindre (20) dans l'au moins une zone de refroidissement (7), étant disposée comme dispositif de levage (31) pour le matériau à traiter (13) dans l'au moins une zone de refroidissement (7), et le revêtement (28) de la vis sans fin (27) présentant une ouverture de décharge (34) pour le matériau à traiter (13) débouchant ou dépassant dans l'au moins une zone de broyage (8).

4. Dispositif selon l'une des revendications précédentes, **caractérisé en ce que** dans le boîtier (6), à la suite de l'au moins une zone de broyage (8) ou de la dernière zone de broyage (8) dans la direction de transport (17), une zone de décharge (37) pour le matériau broyé (15) est disposée, une digue de débordement (38) circonférentielle ou une plaque de tamis perforée (39) circonférentielle étant disposée entre l'au moins une zone de broyage (8) ou la dernière zone de broyage (8) dans la direction de transport (17) et la zone de décharge (37).

5. Dispositif selon la revendication 4, **caractérisé en ce qu'**un autre trajet de transport (40) est formé pour le transfert du matériau broyé (15) de la zone de décharge (37) vers l'écluse de sortie (16), au moins une plaque de levage (42) fixée à une enveloppe cylindrique (32) du cylindre creux (19) et dépassant radialement en direction de l'axe central du cylindre (20) ou sous un angle par rapport à l'axe central du cylindre (20) dans la zone de décharge (37), étant disposée comme dispositif de levage (41) pour le matériau broyé (15) dans la zone de décharge (37).

6. Dispositif selon la revendication 5, **caractérisé en ce que** l'autre trajet de transport (40) comprend une autre vis sans fin gainée (43) disposée le long de l'axe central du cylindre (20) du cylindre creux (19), un revêtement (44) de l'autre vis sans fin (43) présentant, dans la zone de la zone de décharge (37), une ouverture d'entrée (45) pour le matériau broyé (15) orientée à l'opposé d'une surface d'appui (21) pour le cylindre creux (19).

7. Dispositif selon la revendication 5, **caractérisé en ce que** le trajet de transport (18) et l'autre trajet de transport (40) comprennent une vis sans fin gainée (46) commune, disposée de manière continue le long de l'axe central du cylindre (20) à travers toutes les zones (7, 8, 37), dans lequel un revêtement (47) de cette vis sans fin (46) présente, dans la zone de l'au moins une zone de refroidissement (7), une première ouverture de sortie (48) pour le matériau à traiter (13) orientée vers une surface d'appui (21) pour le cylindre creux (19) et comprend, au niveau de l'au moins une zone de broyage (8), une deuxième ouverture de sortie (49) pour le matériau à traiter (13) orientée vers une surface d'appui (21) pour le cylindre creux (19) et dans lequel le revêtement (47) de cette vis sans fin (46) présente, au niveau de l'au moins une zone de refroidissement (7), une première ouverture d'entrée (50) pour le matériau à traiter (13) disposée dans la direction de transport (17) après la première ouverture de sortie (48) et orientée à l'opposé de la surface d'appui (21) et comprend, au niveau de la zone de décharge (37), une deuxième ouverture d'entrée (51) pour le matériau broyé (15), orientée à l'opposé de la surface d'appui (21), dans lequel au moins une plaque d'entraînement (33) perforée, fixée à une enveloppe cylindrique (32) du cylindre creux (19) et dépassant radialement en direction de l'axe central du cylindre (20) ou sous un angle par rapport à l'axe central du cylindre (20) dans l'au moins une zone de refroidissement (7), est disposée comme dispositif de levage (31) pour le matériau à traiter (13) dans l'au moins une zone de refroidissement (7) et dans lequel au moins une plaque de levage (42) fixée à une enveloppe cylindrique (32) du cylindre creux (19) et dépassant radialement en direction de l'axe central du cylindre (20) ou sous un angle par rapport à l'axe central du cylindre (20) dans la zone de décharge (37), est disposée comme dispositif de levage (41) pour le matériau broyé (15) dans la zone de décharge (37).

8. Dispositif selon l'une des revendications précédentes, **caractérisé en ce qu'**une conduite de recirculation (55) est formée, guidée depuis une zone de décharge (53) vers une chambre de pré-refroidissement (54) disposée côté entrée autour du boîtier (6).
